# EUROPEAN PATENT APPLICATION

(11) **EP 2 876 882 A1**
(43) Date of publication of application: **27.05.2015**
(21) Application number: 13835268.7
(22) Date of filing: 09.09.2013
(51) Int. Cl.: H04N 19/00

(54) **IMAGE DECODING METHOD AND APPARATUS USING SAME**

(30) Priority: 09.09.2012 US 201261698711 P; 12.09.2012 US 201261700322 P
(71) Applicant: LG Electronics Inc., Seoul 150-721 (KR)
(72) Inventor: HENDRY, Hendry, Seoul 137-130 (KR); PARK, Joonyoung, Seoul 137-130 (KR); KIM, Chulkeun, Seoul 137-130 (KR); JEON, Byeongmoon, Seoul 137-130 (KR); KIM, Jungsun, Seoul 137-130 (KR)
(74) Representative: Diehl & Partner GbR
(86) International application number: PCT/KR2013/008120
(87) International publication number: WO 2014/038906

(57) **Abstract**

The image decoding method for decoding a bitstream including a plurality of layers, according to the present invention, may comprise: a step of receiving information regarding a video parameter set including information regarding the dimension type for identifying the scalability of the plurality of layers and regarding the length of the dimension ID for identifying the layer to which the dimension type is applied; and a step of parsing the video parameter set in order to identify the information on the scalability contained in the bitstream. Thus, a method for identifying a scalability layer in a bitstream is provided.

## Description

### TECHNICAL FIELD

The present invention relates to a video compression technique, and more particularly, to a method and an apparatus for performing scalable video coding (SVC).

### BACKGROUND ART

In recent years, demands for high-resolution and high-quality videos have increased more and more in various fields of applications. As pictures have higher resolution and higher quality, the amount of information on the pictures also increases.

With the increase in the amount of data, multi-functional devices and networks with various environments are introduced. With the development of the apparatuses having a variety of performance and the networks having various environments, the same contents may be used with different levels of quality.

Specifically, as terminals are able to support diverse qualities of pictures and various network environments are established, a picture with general quality is enabled in one environment while a higher-quality picture may be available in another environment.

For example, a user having purchased video contents through a mobile terminal can enjoy the video contents on a large-screen display with a higher resolution at his or her home.

In recent years, as high definition (HD) broadcast services are available, a large number of users are getting used to high-resolution and high-quality videos and service providers and service users also pay attention to ultrahigh-definition (UHD) services having a resolution four times higher than HDTV.

Thus, there is a need to provide scalability to video quality, for example, the image quality, resolution, size and frame rate of a video, based on high-efficiency encoding and decoding methods on a high-capacity video so as to offer varied qualities of video services in different environments for users' demands.

### SUMMARY OF THE INVENTION

### TECHNICAL PROBLEMS

An object of the invention is to provide a method and an apparatus for describing scalability information in a bitstream.

Another object of the invention is to provide a method and an apparatus for expressing various types of scalability information on a bitstream in a flexible manner.

Still another object of the invention is to provide a method for identifying a scalability layer in a bitstream, and an apparatus using the same.

### TECHNICAL SOLUTION

According to an aspect of the invention, there is provided a method of decoding a video which decodes a bitstream comprising a plurality of layers, the method may include receiving a video parameter set comprising information on a dimension type for identifying scalability of the layers and on a length of a dimension identifier (ID) for identifying a layer to which the dimension type is applied; and parsing the video parameter set to derive scalability information comprised in the bitstream.

The method may further include receiving at least one of a number of dimension types, the dimension ID for identifying the layer to which the dimension type is applied, and a layer ID.

The dimension type and the dimension ID for identifying the layer to which the dimension type is applied are identified by referring to a preset table.

A sum of lengths of dimension IDs for an i-th layer is equal to bits of a layer ID of the i-th layer.

A sum of lengths of dimension IDs for an i-th layer is 6.

The dimension type comprises at least one of multi-view scalability, depth scalability, spatial scalability and quality scalability.

When the number of dimension types is 2, only one piece of information on the length of the dimension ID is received.

The method may further include receiving flag information indicating whether bits of the layer ID are partitioned to indicate the dimension ID, wherein the dimension ID is received when the flag information is 0.

According to another aspect of the invention, there is provided an apparatus for decoding a video which decodes a bitstream comprising a plurality of layers, the apparatus may include an information identification module to parse a video parameter set comprising information on a dimension type for identifying scalability of the layers and on a length of a dimension identifier (ID) for identifying a layer to which the dimension type is applied and to derive scalability information; and an upper layer decoding module to reconstruct a video of an upper layer using the scalability information.

### ADVANTAGEOUS EFFECTS

According to one embodiment of the present invention, there are provided a method and an apparatus for describing scalability information in a bitstream.

According to one embodiment of the present invention, there are provided a method and an apparatus for expressing various types of scalability information on a bitstream in a flexible manner.

According to one embodiment of the present invention, there are provided a method for identifying a scalability layer in a bitstream, and an apparatus using the same.

### BRIEF DESCRIPTION OF THE DRAWINGS

FIG. 1 is a block diagram schematically illustrating a video encoding apparatus that supports scalability according to an embodiment of the invention.
FIG. 2 is a block diagram schematically illustrating a video decoding apparatus that supports scalability according to an embodiment of the invention.
FIG. 3 schematically illustrates a scalable video coding scheme using a plurality of layers according to an embodiment of the present invention.
FIG. 4 illustrates an example of a framework of multi-view coding.
FIG. 5 illustrates an example of a framework of 3D video coding using a depth map.
FIG. 6 illustrates an example of a framework of spatial scalability coding.
FIG. 7 illustrates an example of a framework of quality scalability coding.
FIG. 8 is a block diagram illustrating a video encoding apparatus according to an embodiment of the present invention.
FIG. 9 is a block diagram illustrating a video decoding apparatus according to an embodiment of the present invention.
FIG. 10 is a flowchart illustrating a method of encoding video information according to an embodiment of the present invention.
FIG. 11 is a flowchart illustrating a method of decoding video information according to an embodiment of the present invention.

### DESCRIPTION OF EMBODIMENTS

The present invention can be variously modified in various forms, and specific embodiments thereof will be described and shown in the drawings. However, the embodiments are not intended for limiting the invention. The terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

On the other hand, elements in the drawings described in the invention are independently drawn for the purpose of convenience for explanation of different specific functions in an image encoding/decoding apparatus and does not mean that the elements are embodied by independent hardware or independent software. For example, two or more elements of the elements may be combined to form a single element, or one element may be divided into plural elements. The embodiments in which the elements are combined and/or divided belong to the scope of the invention without departing from the concept of the invention.

Hereinafter, exemplary embodiments of the invention will be described in detail with reference to the accompanying drawings. Like constituents in the drawings will be referenced by like reference numerals and will not be repeatedly described.

In a video coding method that supports scalability (hereinafter, referred to as "scalable coding"), input signals can be processed by layers. Depending on the layers, the input signals (input videos) may be different from each other in at least one of resolution, frame rate, bit depth, color format, and aspect ratio.

In this description, scalable coding includes scalable encoding and scalable decoding.

In scalable encoding/decoding, it is possible to reduce duplicate transmission/processing of information and to enhance compression efficiency by performing inter-layer prediction using an inter-layer difference, that is, on the basis of scalability.

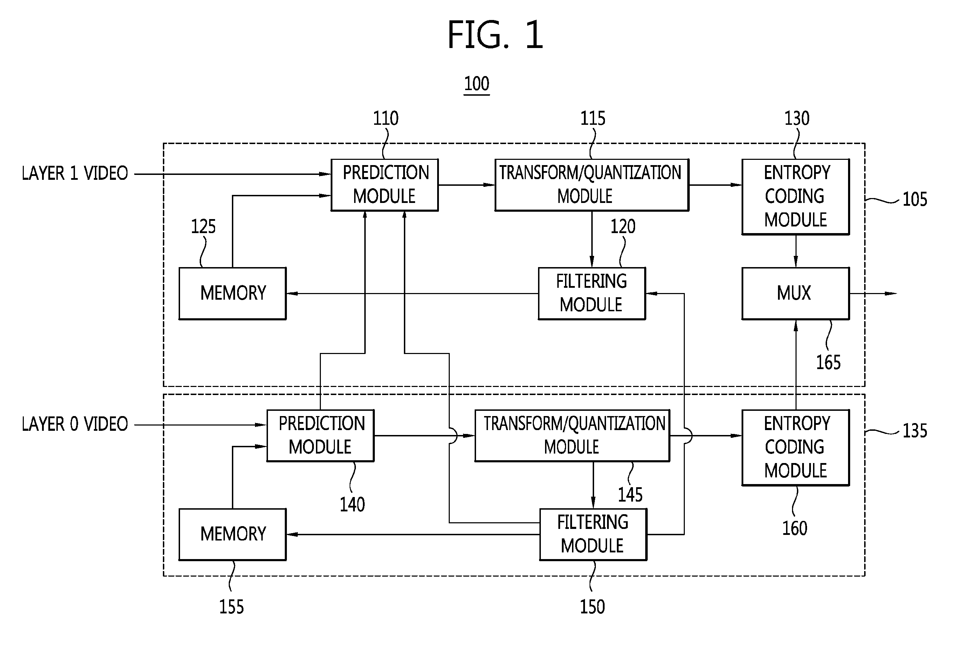

FIG. 1 is a block diagram schematically illustrating a video encoding apparatus that supports scalability according to an embodiment of the invention.

Referring to FIG. 1, the video encoding apparatus 100 includes an encoding module 105 for layer 1 and an encoding module 135 for layer 0.

Layer 0 may be a base layer, a reference layer or a lower layer, and layer 1 may be an enhancement layer, a current layer or an upper layer.

The encoding module 105 for layer 1 includes a prediction module 110, a transform/quantization module 115, a filtering module 120, a decoded picture buffer (DPB) 125, an entropy coding module 130, and a multiplexer (MUX) 165.

The encoding module 135 for layer 0 includes a prediction module 140, a transform/quantization module 145, a filtering module 150, a DPB 155, and an entropy coding module 160.

The prediction modules 110 and 140 may perform inter prediction and intra prediction on an input video. The prediction modules 110 and 140 may perform the predictions by predetermined processing units. The processing unit for prediction may be a coding unit (CU), a prediction unit (PU), or may be a transform unit (TU).

For example, the prediction modules 110 and 140 may determine whether to conduct inter prediction or intra prediction by CU, may determine a prediction mode by PU, and may perform prediction by PU or TU. Prediction to be performed includes construction of a predicted block and construction of a residual block (residual signal).

In the inter prediction, the prediction may be performed on the basis of information on at least one of a previous picture and/or a subsequent picture of a current picture to construct a predicted block. In the intra prediction, the prediction may be performed on the basis of information on a pixel in a current picture to construct a predicted block.

Examples of an inter prediction mode or method include a skip mode, a merge mode, a motion vector predictor (MVP) mode. In the inter prediction, a reference picture for a current PU to be predicted may be selected and a reference block corresponding to the current PU may be selected from the reference picture. The prediction modules 110 and 140 may construct a predicted block on the basis of the reference block.

The predicted block may be constructed as an integer sample unit or as a fractional pixel unit. Here, a motion vector may also be represented in a fractional pixel.

Motion information in the inter prediction, that is, information such as an index, a motion vector and a residual signal of a reference picture, is entropy-encoded and is transmitted to a video decoding apparatus. When a skip mode is applied, the residual signal may not be created, transformed, quantized, and transmitted at all.

Prediction modes in the intra prediction may include 33 directional prediction modes and at least two non-directional modes. The non-directional modes may include a DC prediction mode and a planar mode. In the intra prediction, a predicted block may be constructed after a filter is applied to a reference sample.

A PU may be a block with various sizes and shapes. For example, in inter prediction, a PU may be a 2N×2N, 2N×N, N×2N or N×N block (where N is an integer). In intra prediction, a PU may be a 2N×2N or N×N block (where N is an integer). A PU with a size of NxN may be set to be applied only to a specific case. For example, the PU with the size of NxN may be set to be used only for a smallest CU or only for intra prediction. In addition to the PUs with the above-mentioned sizes, a PU may be further defined as an NxmN block, an mNxN block, a 2NxmN block, or an mNx2N block (where m<1) for use.

The prediction module 110 may perform prediction for layer 1 using information on layer 0. In this specification, a process of predicting current layer information using another layer information is defined as an inter-layer prediction for convenience.

The current layer information predicted using the other layer information (that is, predicted by the inter-layer prediction) may include a texture, motion information, unit information, a predetermined parameter (for example, a filtering parameter), or the like.

The other layer information used for predicting the current layer information (that is, used for the inter-layer prediction) may include a texture, motion information, unit information, a predetermined parameter (for example, a filtering parameter), or the like.

As an example of the inter-layer prediction, an inter-layer motion prediction is also referred to as an inter-layer inter prediction. According to the inter-layer inter prediction, prediction for a current block of layer 1 (current layer or enhancement layer) may be carried out using motion information on layer 0 (reference layer or base layer).

When the inter-layer inter prediction is employed, motion information on a reference layer may be scaled.

As another example of the inter-layer prediction, an inter-layer texture prediction is also referred to as an inter-layer intra prediction or intra base layer (BL) prediction. The inter-layer texture prediction may be employed when a reference block in a reference layer is reconstructed by intra prediction.

The inter-layer intra prediction may use a texture of a reference block in a reference layer as a predictive value for a current block in an enhancement layer. Here, the texture of the reference block may be scaled by upsampling.

As still another example of the inter-layer prediction, an inter-layer unit parameter prediction may derive unit (CU, PU and/or TU) information on a base layer to be used as unit information on an enhancement layer or to determine unit information on an enhancement layer based on the unit information on the base layer.

Unit information may include information in each unit level. For instance, CU information may include information on partition (CU, PU and/or TU), information on transformation, information on prediction, and information on coding. PU information may include information on PU partition and information on prediction (for example, motion information and information on a prediction mode). TU information may include information on TU partition and information on transformation (transform coefficients and transform methods).

Unit information may include only partition information on a processing unit (for example, CU, PU, TU, etc.).

As yet another example of the inter-layer prediction, an inter-layer parameter prediction may derive a parameter used in a base layer to be reused for an enhancement layer or may predict a parameter for the enhancement layer based on the parameter used in the base layer.

Although the inter-layer texture prediction, the inter-layer motion prediction, the inter-layer unit information prediction and the inter-layer parameter prediction have been illustrated above as inter-layer predictions, alternative inter-layer predictions may also be applicable to the present invention, without limiting thereto.

For example, the prediction module 110 may conduct, as an inter-layer prediction, an inter-layer residual prediction of predicting a residual of a current layer using residual information on another layer and performing prediction for a current block in the current layer based on the residual.

Further, the prediction module 110 may conduct, as an inter-layer prediction, an inter-layer differential prediction of performing prediction for a current block in a current layer using a differential picture between pictures obtained by upsampling or downsampling a reconstructed picture of the current layer and a reconstructed picture of another layer.

In addition, the prediction module 110 may employ, as an inter-layer prediction, an inter-layer syntax prediction for predicting or generating a texture of a current block using syntax information on another layer. Here, the syntax information on the reference layer used for prediction of the current block may be information on an intra prediction mode, motion information, or the like.

Here, the inter-layer syntax prediction may be performed by referring to an intra prediction mode from a block (intra) in the reference layer to which the intra prediction mode is applied and by referring to motion information from a block (MV) to which an inter prediction mode is applied.

For instance, although the reference layer is a P slice or B slice, a reference block in the slice may be a block subjected to an intra prediction mode. In this case, when the inter-layer syntax prediction is applied, inter-layer prediction of generating/predicting the texture of the current block may be performed using the intra prediction mode of the reference block of the syntax information on the reference layer.

A plurality of methods among the foregoing various inter-layer prediction methods may be used for predicting a particular block. For instance, to predict a current block, unit information on corresponding layer 0 or a corresponding block, filtering parameter information, or the like may be additionally used while prediction information on layer 0 is used. Such a combination of inter-layer prediction methods may also be applied to prediction which will be mentioned below in this specification.

The transform/quantization modules 115 and 145 may transform the residual block by TU to create transform coefficients and may quantize the transform coefficients.

A transform block is a rectangular block of samples to which the same transformation is applied. The transform block may be a TU and may have a quad-tree structure.

The transform/quantization modules 115 and 145 may perform transformation based on a prediction mode applied to the residual block and a size of the block and a size of the transform block to create a two-dimensional (2D) array of transform coefficients. For example, when intra prediction is applied to the residual block and the residual block has a 4x4 array, the residual block may be transformed using discrete sine transform (DST). Otherwise, the residual block may be transformed using discrete cosine transform (DCT).

The transform/quantization modules 115 and 145 may quantize the transform coefficients to create the quantized transform coefficients.

The transform/quantization modules 115 and 145 may transmit the quantized transform coefficients to the entropy coding modules 130 and 180. Here, the transform/quantization module and 145 may rearrange the 2D array of the quantized transform coefficients into a one-dimensional (1D) array in a predetermined scan order and may transmit the rearranged 1D array to the entropy coding modules 130 and 180. The transform/quantization modules 115 and 145 may transmit a reconstructed block generated on the basis of the residual block and the predicted block to the filtering modules 120 and 150 for inter prediction, without being transformation/quantization.

If necessary, the transform/quantization modules 115 and 165 may skip transformation and perform only quantization or may skip both transformation and quantization. For example, the transform/quantization modules 115 and 145 may skip transformation for a block involving a specific prediction method or having a specific size, or a block involving a specific prediction block and having a specific size.

The entropy coding modules 130 and 180 may perform entropy encoding on the quantized transform coefficients. An encoding method, such as exponential Golomb coding and context-adaptive binary arithmetic coding (CABAC), may be used for entropy encoding.

The filtering modules 120 and 150 may apply a deblocking filter, an adaptive loop filter (ALF), or a sample adaptive offset (SAO) to a reconstructed picture.

The deblocking filter may remove a block distortion generated on boundaries between blocks in the reconstructed picture. The ALF may perform a filtering process on the basis of a resulting value of comparing the original picture with the reconstructed picture of which the blocks are filtered by the deblocking filter. The SAO may reconstruct an offset difference by pixel between the residual block having been subjected to the deblocking filter and the original picture and is applied in a form of a band offset, an edge offset, or the like.

The filtering modules 120 and 150 may not apply all of the deblocking filter, the ALF and the SAO, but may apply only the deblocking filter, may apply only the deblocking filter and the ALF, or may apply only the deblocking filter and the SAO.

The DPBs 125 and 155 may receive and store the reconstructed block or the reconstructed picture from the filtering modules 120 and 150. The DPB 125 and 155 may provide the reconstructed block or picture to the prediction modules 110 and 140 that perform inter prediction.

Information output from the entropy coding module 160 for layer 0 and information output from the entropy coding module 130 for layer 1 may be multiplexed by the MUX 185 and may be output as a bitstream.

Although the encoding module 105 for layer 1 has been described to include the MUX 165 for convenience, the MUX may be a device or module independent of the encoding module 105 for layer 1 and the encoding module 135 for layer 0.

The encoding apparatus of FIG. 1 may be configured as an electronic apparatus capable of capturing and encoding an image including a camera. For example, the encoding apparatus may be configured as or included in an electronic apparatus, such as a television, a computer system and a portable electronic device including a mobile phone or a tablet PC.

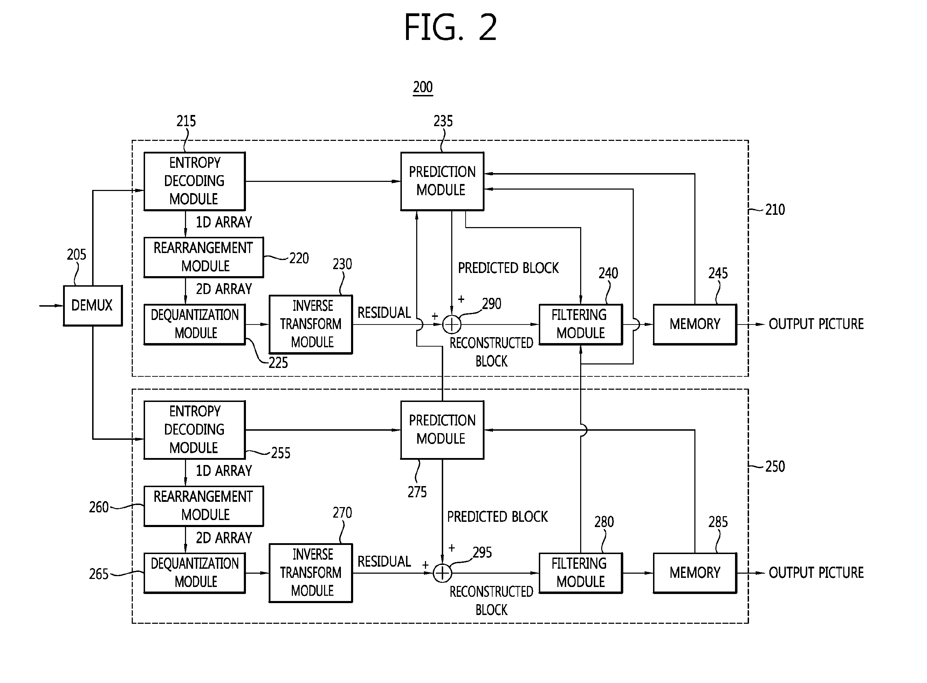

FIG. 2 is a block diagram illustrating an example of inter-layer prediction in a video decoding apparatus performing scalable coding according to the invention.

Referring to FIG. 2, the video decoding apparatus 200 includes a decoding module 210 for layer 1 and a decoding module 250 for layer 0.

Layer 0 may be a base layer, a reference layer or a lower layer, and layer 1 may be an enhancement layer, a current layer or an upper layer.

The decoding module 210 for layer 1 may include an entropy decoding module 215, a rearrangement module 220, a dequantization module 225, an inverse transform module 230, a prediction module 235, a filtering module 240, and a memory.

The decoding module 250 for layer 0 may include an entropy decoding module 255, a rearrangement module 260, a dequantization module 265, an inverse transform module 270, a prediction module 275, a filtering module 280, and a memory 285.

When a bitstream including video information is transmitted from the video encoding apparatus, a demultiplexer (DEMUX) 205 may demultiplex the information by layers and may transmit the information to decoders by layers.

The entropy decoding modules 215 and 255 may perform entropy decoding corresponding to an entropy coding method used in the video encoding apparatus. For example, when CABAC is used in the video encoding apparatus, the entropy decoding modules 215 and 255 may perform entropy decoding using CABAC.

Information for constructing a predicted block out of information decoded by the entropy decoding modules 215 and 255 may be provided to the prediction modules 235 and 275, and residual values entropy-decoded by the entropy decoding modules 215 and 255, that is, quantized transform coefficients, may be input to the rearrangement modules 220 and 260.

The rearrangement modules 220 and 260 may rearrange the information of the bitstream entropy-decoded by the entropy decoding modules 215 and 255, that is, the quantized transform coefficients, on the basis of a rearrangement method used in the video encoding apparatus.

For example, the rearrangement modules 220 and 260 may rearrange a 1D array of the quantized transform coefficients back into a 2D array of coefficients. The rearrangement modules 220 and 260 may perform scanning on the basis of a prediction mode applied to a current block (transform block) and/or a size of the transform block to construct a 2D array of coefficients (quantized transform coefficients).

The dequantization modules 225 and 265 may perform dequantization on the basis of a quantization parameter transmitted from the video encoding apparatus and the rearranged coefficients of the block to create transform coefficients.

The inverse transform modules 230 and 270 may perform inverse transformation of transformation performed by a transform module of the video encoding apparatus on the transform coefficients. The inverse transform modules 230 and 270 may perform inverse DCT and/or inverse DST of DCT and DST performed by the video encoding apparatus.

In the video encoding apparatus, DCT and/or DST may be selectively performed depending on a plurality of information pieces, such as a prediction method, a size of a current block and a prediction direction, and the inverse transform modules 230 and 270 of the video decoding apparatus may perform inverse transformation on the basis of transform information used by the video decoding apparatus.

For example, the inverse transform modules 230 and 270 may perform inverse DCT and inverse DST depending on a prediction mode/block size. Specifically, the inverse transform modules 230 and 270 may perform inverse DST on a 4x4 luma block to which intra prediction has been applied.

Alternatively, the inverse transform modules 330 and 370 may fixedly use a specific inverse transformation method regardless of a prediction mode/block size. For example, the inverse transform modules 330 and 370 may apply only inverse DST to all transform blocks. The inverse transform modules 230 and 270 may also apply only inverse DCT to all transform blocks.

The inverse transform modules 230 and 270 may inversely transform the transform coefficients or a block of the transform coefficients to construct a residual signal or a residual block.

The inverse transform modules 230 and 270 may skip transformation if necessary or depending on an encoding method used for the video encoding apparatus. For example, the inverse transform modules 230 and 270 may skip transformation for a block involving a specific prediction method or having a specific size, or a block involving a specific prediction block and having a specific size.

The prediction modules 235 and 275 may construct a predicted block of the current block on the basis of predicted block construction information provided from the entropy decoding modules 215 and 255 and information on a previously decoded block and/or picture provided from the memories 245 and 285.

When a prediction mode for the current block is an intra prediction mode, the prediction modules 235 and 275 may perform intra prediction on the current block on the basis of information on a pixel in a current picture.

When the prediction mode for the current block is an inter prediction mode, the prediction modules 235 and 275 may perform inter prediction on the current block on the basis of information included in at least one of a previous picture and a subsequent picture of the current picture. Part or all of motion information necessary for inter prediction may be derived based on information received from the video encoding apparatus.

When the skip mode is used as an inter prediction mode, the residual may not be transmitted from the video encoding apparatus and the predicted block may be used as a reconstructed block.

The prediction module 235 for layer 1 may perform inter prediction or intra prediction using only information in layer 1 and may perform inter-layer prediction using information on another layer (layer 0).

For instance, the prediction module 235 for layer 1 may perform prediction for the current block using one of motion information on layer 1, texture information on layer 1, unit information on layer 1 and parameter information on layer 1.

The prediction module 235 for layer 1 may receive the motion information on layer 1 from the prediction module 275 for layer 0 and may perform motion prediction. The inter-layer motion prediction is also referred to as an inter-layer inter prediction. By the inter-layer motion prediction, prediction for the current block in the current layer (enhancement layer) may be performed using the motion information on the reference layer (base layer). If necessary, the prediction module 335 may scale and use the motion information on the reference layer.

The prediction module 235 for layer 1 may receive the texture information on layer 0 from the prediction module 275 for layer 0 and may perform texture prediction. The texture prediction is also referred to as an inter-layer intra prediction or intra base layer

(BL) prediction. The texture prediction may be employed when a reference block in a reference layer is reconstructed by intra prediction. Alternatively, the texture prediction may refer to a reference layer allocated a reference index.

In the inter-layer intra prediction, a texture of a reference block in a reference layer may be used as a predictive value for the current block in the enhancement layer. Here, the texture of the reference block may be scaled by upsampling.

The prediction module 235 for layer 1 may receive unit parameter information on layer 0 from the prediction module 275 for layer 0 and may perform unit parameter prediction. By the unit parameter prediction, unit (CU, PU, and/or TU) information on the base layer may be used as unit information on the enhancement layer or unit information on the enhancement layer may be determined on the basis of the unit information on the base layer.

The prediction module 235 for layer 1 may receive filtering parameter information on layer 0 from the prediction module 275 for layer 0 and may perform parameter prediction. By the parameter prediction, a parameter used for the base layer may be derived to be reused for the enhancement layer or a parameter for the enhancement layer may be predicted on the basis of the parameter used for the base layer.

A plurality of methods among the foregoing various inter-layer prediction methods may be used for predicting a particular block. For instance, to predict a current block, unit information on corresponding layer 0 or a corresponding block, filtering parameter information, or the like may be additionally used while prediction information on layer 0 is used. Such a combination of inter-layer prediction methods may also be applied to prediction which will be mentioned below in this specification.

Adders 290 and 295 may construct a reconstructed block using the predicted block constructed by the prediction modules 235 and 275 and the residual block constructed by the inverse transform modules 230 and 270. In this case, the adders 290 and 295 may be considered as separate modules (reconstructed block constructing module) that construct a reconstructed block.

The block and/or picture reconstructed by the adders 290 and 295 may be supplied to the filtering modules 240 and 280.

Referring to FIG. 2, the filtering module 240 for layer 1 may perform a filtering operation on the reconstructed picture using the parameter information transmitted from the prediction module 235 for layer 0 and/or the filtering module 280 for layer 1. For example, the filtering module 240 for layer 1 may perform a filtering operation on layer 1 or an inter-layer filtering operation using a parameter predicted from a filtering parameter applied to layer 0.

The memories 245 and 285 may store the reconstructed block or picture for use as a reference picture or reference block. The memories 245 and 285 may output the reconstructed picture stored in the memories 245 and 285 via a predetermined output module (not shown) or a display (not shown).

Although FIG. 2 illustrates the rearrangement modules, the dequantization modules and the inverse transform modules as independent modules, the video decoding apparatus may also be configured to enable the dequantization/inverse transform modules as a single module to sequentially perform rearrangement, dequantization, and inverse transform like the video encoding apparatus of FIG. 1.

Although FIGS. 1 and 2 illustrate the prediction modules, the prediction module for layer 1 may include an inter-layer prediction module that performs a prediction process using information on another layer (layer 0) and an inter/intra prediction module that performs a prediction process without using information on another layer (layer 0).

The decoding apparatus of FIG. 2 may be configured as various electronic apparatuses capable of reproducing an image or reproducing and displaying an image. For example, the decoding apparatus may be configured as or included in an electronic apparatus, such as a set-top box, a television, a computer system and a portable electronic device including a mobile phone or a tablet PC.

In encoding and decoding a video supporting a plurality of layers in a bistream, that is, scalable coding, there are strong correlations among the plurality of layers. Thus, when prediction is performed using the correlations, redundant elements of data may be removed and video encoding performance may be enhanced. Predicting a current layer to be predicted using information on another layer is defined below as inter-layer prediction. Hereinafter, scalable video coding refers to scalable video encoding in encoding, and to scalable video decoding in decoding.

A plurality of layers may be different from one another in at least one of resolution, frame rate and color format, and upsampling or downsampling of a layer may be performed to adjust resolution in inter-layer prediction.

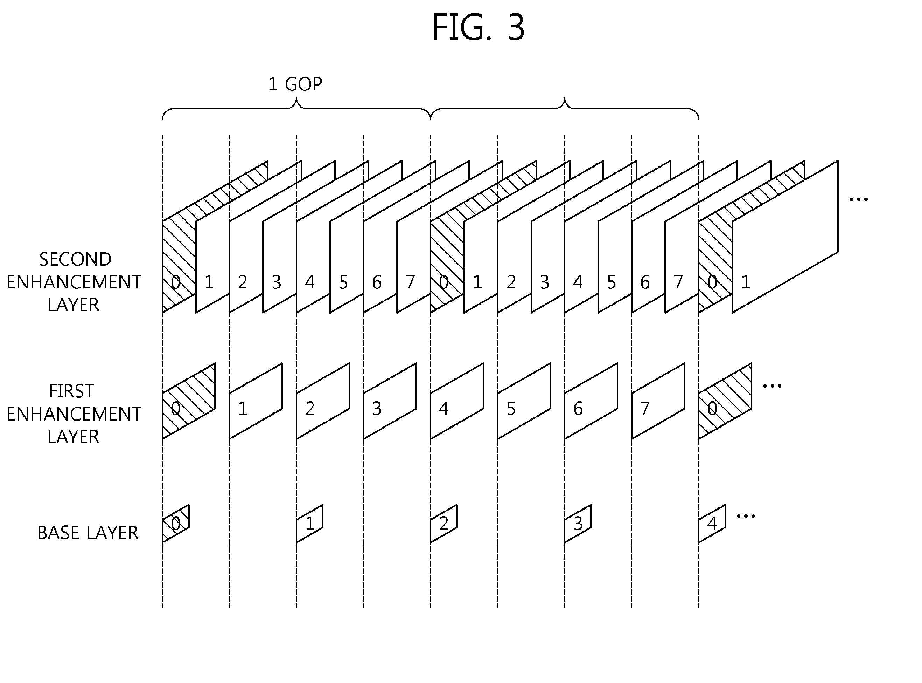

FIG. 3 is a conceptual diagram schematically illustrating a scalable video coding structure using a plurality of layers according to an embodiment of the invention. In FIG. 3, Group of Picture (GOP) denotes a picture group, that is, a group of pictures.

In order to transmit video data, a transmission medium is needed, and performance thereof is different by each transmission medium according to various network environments. For application to various transmission media or network environments, a scalable video coding method may be provided.

The scalable video coding method is a coding method which utilizes texture information, motion information, residual signals between layers, or the like to remove redundancy between layers, thus improving encoding and decoding performance. The scalable video coding method may provide scalability in various spatial, temporal, and quality aspects according to ambient conditions such as a transmission bit rate, a transmission error rate, and a system resource.

Scalable video coding may be performed by using a multi-layer structure so as to provide a bit stream applicable to various network situations. For example, the scalable video coding structure may include a base layer in which video data is compressed and processed using a general video decoding method, and also include an enhancement layer in which video data is compressed and processed using both decoding information of the base layer and a general video decoding method.

Here, a layer refers to a set of pictures and bitstreams that are classified according to a spatial aspect (for example, picture size), a temporal aspect (for example, decoding order, picture output order and frame rate), picture quality, complexity, or the like. The base layer may refer to a reference layer or a basic layer, and the enhancement layer may refer to an enhancing layer or a higher layer. A plurality of layers may have dependency on each other.

Referring to FIG. 3, for example, the base layer may be defined by standard definition (SD), 15 Hz frame rate and 1 Mbps bit rate, a first enhancement layer may be defined by high definition (HD), 30 Hz frame rate and 3.9 Mbps bit rate, and a second enhancement layer may be defined by 4K-ultra high definition (UHD), 60 Hz frame rate and 27.2 Mbps. These formats, frame rates and bit rates are provided only for illustrative purposes and may be changed and modified as needed. Also, a number of used layers may change depending on circumstances, without being limited to the present embodiment.

For instance, when a transmission bandwidth is 4 Mbps, the first enhancement layer HD may be transmitted at a frame rate reduced to 15 Hz or lower. The scalable video coding method may provide spatial, temporal, and quality scalabilities using the method described above with reference to FIG. 3.

Scalable video coding refers to scalable video encoding in encoding, and to scalable video decoding in a decoding.

meanwhile, a bitstream including multi layers may consist of Network Abstraction Layer units to easily adaptive transmit through packet-switching network. In multi-view video coding including multi view pictures as similar to multi layers in a bitsteam, the relation of the multi views is similar to that of spatial layers in multi-layer video.

To effectively and efficiently convert a bitstream at all nodes in a content delivery path, scalability information on the bitstream is very important. In a current video coding standard, HEVC, for a single layer, two fields relating to layer information are present in an NAL unit header.

Table 1 illustrates an example of the NAL unit header.

**[Table 1]**

| nal_unit_header() { | **Descriptor** |
|---|---|
| **forbidden_zero_bit** | 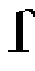 (1) |
| **nal_unit_type** | u(6) |
| **nuh_reserved**_**zero_6 bits** | u(6) |
| **nuh_temporal_id_p**l**us1** | u(3) |
| **}** | |

Referring to Table 1, forbidden_zero_bit is 1.

nal_unit_type specifies the kind or type of an NAL unit.

nuh_reserved_zero_6bits is a field for indicating information on another layer, that is, scalability, and may include information on a layer identifier (ID) for identifying a layer.

temporal_id having a three-bit length specifies a temporal layer of a video bitstream. A temporal layer refers to a temporally scalable layer of a bitstream formed of video coding layer (VCL) NAL units and has a particular temporal_id value.

In coding a bitstream supporting a plurality of scalabilities (for example, multi-view and 3D extension), the structure of the NAL unit header as illustrated in Table 1 may also be used. In this case, scalability information, for example, layer ID information, may be transmitted six-bit nuh_reserved_zero_6bits in Table 1 in the NAL unit header.

Thus, it is necessary to signal information mapping layer ID information signaled in an NAL unit header onto the scalability type of the layer, that is, the scalability type applied to the layer.

A scalability type and kind and information mapping the type and kind onto a layer ID may be included in a video parameter set or be included in a video parameter set extension for a bitstream supporting scalability.

The present invention relates to a method for effectively describing scalability information on a video in a bitstream supporting a plurality of layers and signaling the scalability information, and an apparatus for implementing the method.

Table 2 illustrates an example of a current video parameter set.

**[Table 2]**

| video_parameter_set_rbsp () { | Descriptor |
|---|---|
| **video_parameter_set_id** | u(4) |
| **vps_temporal_id_nesting_flag** | u(1) |
| **reserved_zero_2bits** | u(2) |
| **max**_**num**_**layers**_**minus1** //reserved zero 6bits in the base spec | u(6) |
| **vps_max_sub_layers_minus1** | u(3) |
| profile_level(1, vps_max_sub_layers_minus1) | |
| **next_essential_info_byte_offset** //reserved zero_12bits in the base spec | u(12) |
| for( i = 0; i <= vps_max_sub_layers_minus1; i++) { | |
| **vps_max_dec_pic_buffering[ i ]** | ue(v) |
| **vps_max_num_reorder_pics[ i ]** | uc(v) |
| **vps_max_latency_increase[ i ]** | ue(v) |
| **}** | |
| **num_hrd_parameters** | uc(v) |
| for( i = 0; i < num_hrd_parameters; i++ ) { | |
| if(i>0) | |
| op_point( i ) | |
| hrd_parameters( i = = 0, vps_max_sub_layers_minus1) | |
| **}** | |
| **bit_equal_to_one** | u(1) |
| vps_extension() | |
| **vps_extension_flag** | n(1) |
| if(vps_extension_flag) | |
| while (more_rbsp_data( )) | |
| **vps_extension_data_flag** | u(1) |
| rbsp_trailing_bits( ) | |
| **}** | |

Referring to Table 2, video_parameter_set_id is a syntax element for identifying the video parameter set referenced by another syntax element.

vps_temporal_id_nesting_flag specifies whether inter prediction is additionally restricted for a coded video sequences referring to the video parameter set when vps_max_sub_layers_minus1 is greater than 0. When vps_max_sub_layers_minus1 is equal to 0, vps_temporal_id_nesting_flag needs to be 1. vps_temporal_id_nesting_flag is used in temporal sub-layer upsampling.

reserved_zero_2bits may be 3 in a bitstream, and values other than 3 may be additionally used for other applications, in which case a decoding module may ignore the value of reserved_zero_2bits.

max_num_layers_minus1 plus 1 specifies the maximum number of layers present in the coded video sequence referring to the video parameter set.

vps_max sub_layers_minus1 plus 1 specifies the maximum number of temporal sub-layers that may be present in the coded video sequence. vps_max_sub_layers_minus1 may be in a range of 0 to 6.

next_essential_info_byte_offset specifies a byte offset to a next set of fixed-length coded information in a video parameter set NAL unit from the start of an NAL unit.

Video parameter set information for a base layer or base view is fixed-length coded information, which starts from the position of a byte allocated to the video parameter set NAL unit. The byte offset specified by next_essential_info_byte_offsetmay helps to access essential information in the video parameter set NAL unit without performing entropy decoding. next_essential_info_byte_offset is essential information for session negotiations and/or capacity exchanges.

vps_max_dec_pic_buffering[ i ] specifies the maximum required size of a decoded picture buffer for the coded video sequence in units of picture storage buffers.

vps_max_num_reorder_pics[ i ] specifies the maximum allowed number of pictures that can precede any picture in the coded video sequence in decoding order and follow the picture in output order.

vps_max_latency_increase[ i ] is not equal to 0 and is used to compute the maximum number of latency pictures, which specifies the maximum number of pictures which can precede any picture in the coded video sequence in decoding order and follow the picture in output order.

num_hrd_parameters specifies the number of hrd_parameters( ) syntax elements present in the video parameter set, wherein num_hrd_parameters may be less than or equal to 1 in the bitstream. If num_hrd_parameters is not less than or equal to 1, a decoding module may allow another value in a range of 1 to 1024, indicated by the syntax element, as the value of num_hrd_parameters.

bit_equal_to_one is 1.

vps_extension_flag equal to 0 specifies that no vps_extension_data_flag syntax element is present in the video parameter set, and vps_extension_flag equal to 1 specifies that vps_extension_data_flag is present for a layer extension version.

vps_extension_data_flag specifies whether data for the layer extension version is present, which may have any value.

If the bitstream is a layer extension version supporting a plurality of layers, vps_extension_flag and vps_extension_data_flag may be 1 and various pieces of information on the layers may be included and signaled in a video parameter in the bitstream, for example, a video parameter sets extension.

The information on the layers which may be included in the video parameter set extension may include information on all possible scalabilities for the layers, that is, information on dimensions, wherein the information on the dimensions may be set using a table.

In addition, the signaled information on the layers may include the number of dimensions for the layers, the active range of each dimension for each layer, information on layer identification, and a list of direct reference layers.

Total bits for indicating a dimension for each layer needs to be matched with bits allocated for signaling the layer ID signaled in the NAL unit header in Table 1. If the layer ID signaled in the NAL unit header is 6 bits, six bits are used in total for describing the dimension applicable to each layer.

Table 3 illustrates a video parameter set extension according to an embodiment of the present invention.

**[Table 3]**

| vps_extension(){ | Descriptor |
|---|---|
| while(!bytealigned()) | |
| **vps_extension_byte_a**l**ignment_reserved_one_bit** | u(l) |
| // layer specific information | |
| **num_dimension_minus1** | ue(v) |
| for (i = 0; i <= num_dimension_minus1; i++) { | |
| **dimension_type[i]** | u(4) |
| **dimension_len[i]** | u(3) |
| } | |
| for (i = 1; i <= vps_max_layers_minus1; i++) { | |
| **vps layer_id[i]** | u(6) |
| // layer dependency | |
| **num_direct_ref_layers[i]** | u(6) |
| for( j = 0; j < num_direct_ref_layers[i]; j++ ) | |
| **ref_layer_id[i][j]** | u(6) |
| **}** | |
| **}** | |

Referring to Table 3, vps_extension_byte_alignment_reserved_one_bit is 1.

num_dimensions_minus1 [ i ] plus 1 specifies the number of dimension types and dimension IDs signaled for each layer.

dimension_type[ i ] specifies a j-th scalability dimension type of an i-th layer, as illustrated in Table 4.

In a bitstream supporting a plurality of scalabilities, a dimension type refers to a scalability type, such as spatial scalability and quality scalability, and a dimension ID refers to an index of a particular dimension type with respect to a layer, which may mean information for identifying the layer to which the particular dimension type is applied.

A dimension type may be mapped onto a dimension ID (dimension_id) that is the scalability ID of a layer.

**[Table 4]**

| dimension_type[i][j] | dimension_id[i][j] |
|---|---|
| 0 | view order idx |
| 1 | depth order idx |
| 2 | dependency ID |
| 3 | quality ID |
| 4..15 | Reserved |

Referring to Table 4, scalability types may include multi-view scalability, depth scalability, spatial scalability and quality scalability.

When num_dimensions_minus1 [ i ] is signaled, information on dimension types (dimension_type) for the i-th layer as many as the number of dimensions is signaled while increasing the dimension types by 1 from 0.

When dimension_type signaled for the i-th layer is 0, multi-view scalability is applied to the layer; and when dimension_type is 1,depth scalability is applied to the layer. When dimension_type is 2, spatial scalability is applied to the layer; and when dimension_type is 3, quality scalability is applied to the layer. According to Table 4, one layer may have at most four kinds of scalabilities.

The dimension IDs illustrated in Table 4 are examples of scalabilities supported by the bitstream, wherein dimension IDs may be further added or the bitstream may support only part of the four dimensions listed in Table 4. dimension_type values of 4 to 15 may be used to describe additional scalability types.

Hereinafter, each dimension type and each dimension ID will be described in detail.

A dimension ID of view order idx for identifying multi-view scalability means that a layer is coded by a multi-view coding scheme.

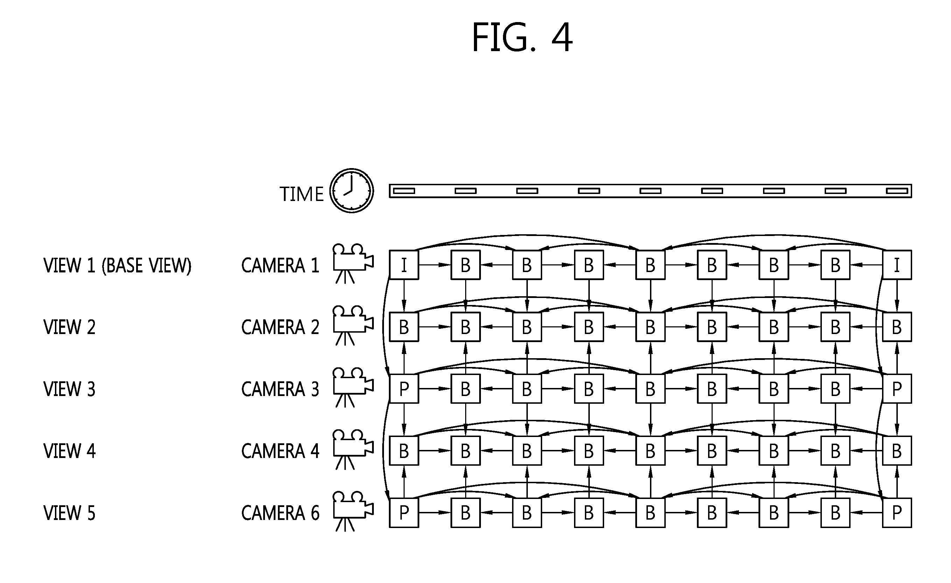

FIG. 4 illustrates an example of a framework of multi-view coding.

As illustrated, video streams may be created by five cameras in total for multi-view coding, wherein a video stream created by camera 1 is a base view. Videos created by cameras 2 to 5 may be coded with reference to other view videos including a video by camera 1.

A video stream created by camera 3 may be another view (for example, view 2) predicted and coded with reference to the base view.

A video stream created by camera 2 may be another view (for example, view 3) predicted and coded with reference to the base view and view 2.

A video stream created by camera 5 may be another view (for example, view 4) predicted and coded with reference to the base view.

A video stream created by camera 4 may be another view (for example, view 5) predicted and coded with reference to the base view and view 4.

View order idx is a value for identifying the order of a view layer, that is, a layer among a plurality of multi-view layers, in a bitstream. View order idx may be part of layer IDs related to the NAL unit.

A dimension ID of depth order idx for identifying depth scalability means that a layer is coded by a 3D video coding scheme. In 3D video coding, a depth map is used for one or more coded frames to render a 3D picture, in which depth order idx is used to identify a layer of the depth map or the order of a depth layer/depth order in a coded 3D video stream.

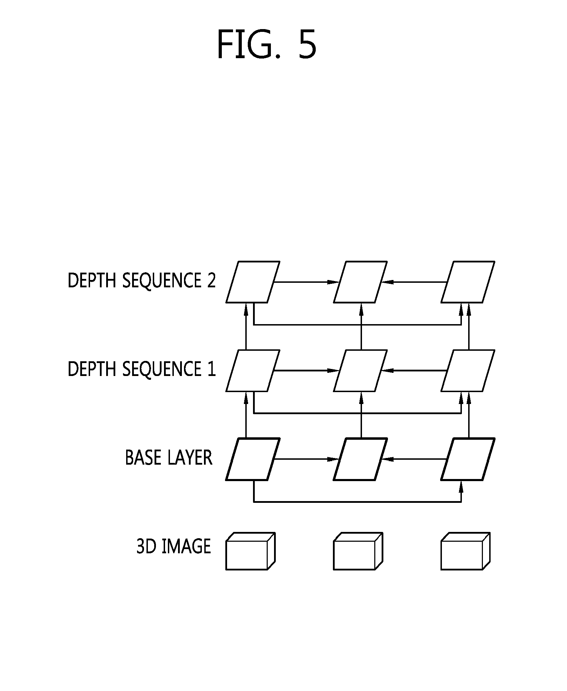

FIG. 5 illustrates an example of a framework of 3D video coding using a depth map.

As illustrated in FIG. 5, a 3D video may be coded using a plurality of depth maps, and a base layer may be referenced by upper layers which may be represented by depth order 1 and depth order 2. A layer represented by depth order N may have depth dependency on a layer lower in order than N.

Depth order idx is a value for identifying a layer of a depth map or the order of a depth layer/depth order, that is, a layer among a plurality of depth map layers. Depth order idx may be part of layer IDs related to the NAL unit.

A dimension ID of dependency ID for identifying spatial scalability means that an upper layer is predicted and subjected to spatial scalability coding with reference to a coded video of a lower layer.

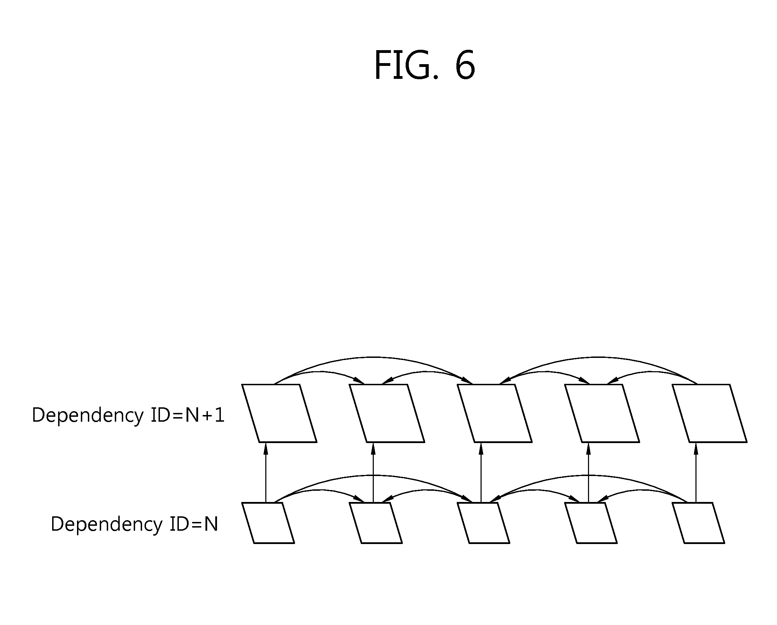

FIG. 6 illustrates an example of a framework of spatial scalability coding.

In a video to which spatial scalability is applied, each spatial scalability layer includes a lower layer and an upper layer having a higher spatial resolution (for example, picture width or picture height) than the lower layer.

A layer having a dependency ID of N may be a base layer, and a layer having a dependency ID of N+1 is an upper layer having a higher resolution than the layer having the dependency ID of N and may be coded using coded video information on the base layer.

Dependency ID is used to identify the order of a spatial layer in a bitstream and may be part of layer IDs related to the NAL unit.

A dimension ID of quality ID for identifying quality scalability means that an upper layer is predicted and subjected to quality scalability coding with reference to a coded video of a lower layer.

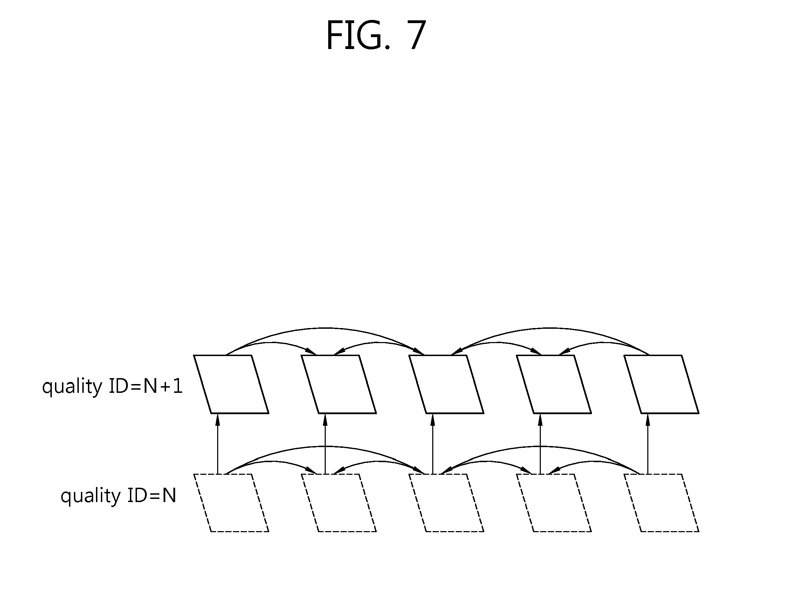

FIG. 7 illustrates an example of a framework of quality scalability coding.

In a video to which quality scalability is applied, each quality scalability layer includes a lower layer and an upper layer having the same spatial resolution (for example, picture width or picture height) as the lower layer but a higher visual quality than the lower layer.

A layer having a quality ID of N may be a base layer, and a layer having a quality ID of N+1 is an upper layer having a higher quality than the layer having the quality ID of N and may be coded using the base layer.

Quality ID is used to identify the order of a quality scalability layer in a bitstream and may be part of layer IDs related to the NAL unit.

The same codec scheme may be applied to both quality scalability and spatial scalability, in which case quality scalability and spatial scalability may be represented by a single ID.

As described above, the bitstream may include layers supporting various types of scalabilities, and scalability may be represented with information on a dimension type and information on a dimension ID for identifying a layer with respect to a dimension mapped onto the dimension type. In this case, the dimension type may be signaled from an encoding apparatus to a decoding apparatus, and a mapping relationship between the dimension type and the dimension ID may be set in advance through a preset table in the encoding apparatus and the decoding apparatus.

dimension_len[ i ] specifies the length, that is, bits, of an i-th dimension ID, wherein dimension_len[ i ] may have a value in a range of 1 to 6, and the dimension_len[ i ] sum for an i-th layer needs to be 6.

dimension_len[ i ] may be signaled using syntax element dimension_id_len or dimension_id_len_minus1. In this case, the sum of values specified by dimension_id_len or dimension_id_len_minus1 needs to be 6.

Information indicating the dimension of the i-th layer needs to be mapped onto a layer ID included in the NAL unit header so as to identify the layer, and accordingly the sum of dimension_len[ i ] specifying the length of the dimension ID representing the dimension needs to be smaller than or equal to the length of the layer ID.

When the length of the layer ID for identifying the layer is six bits, dimension_len[ i ] may have a value in a range of 1 to 6 and the sum of dimension_len[ i ] needs to be six bits.

vps_layer_id [ i ] specifies the layer ID of the i-th layer to which dependency information is applied, and bits of each vps_layer_id [ i ] may be configured as follows.

dimension_len [0] + dimension_len [1] + ... + dimension_len [num_dimension_minus1]

The layer ID information included in the video parameter set may be the same as the information for identifying the layer included in the NAL unit header.

num_direct_ref_layers[i] specifies the number of layers to which the i-th layer directly refers.

ref_layer_id[ i ][ j ] is information for identifying a j-th layer to which the i-th layer directly refers.

An example of identifying scalability information based on syntax elements included in the video parameter set in Table 3 will be described as follows.

First, suppose that a bitstream supports spatial and quality scalabilities, a base layer and a first enhancement layer referring to the base layer are present with respect to quality scalability, and the base layer, the first enhancement layer and a second enhancement layer are present with respect to spatial scalability. In this case, signaling is performed as follows.

vps_max_layers_minus1 = 6

num_dimension_minus1 = 1

vps_max_layers_minus1 = 6 indicates that the maximum number of layers is seven, and num_dimension minus1 = 1 indicates that the number of dimensions, that is, scalabilities, supported by the current bitstream is two.

dimension_type [0] =2

dimension_length [0] = 3

Since first dimension_type [0] equal to 2 indicates that the dimension ID is a dependency ID with reference to Table 4, spatial scalability is supported.

Further, dimension_length [0] = 3 indicates that the length of the dimension ID representing spatial scalability is three bits.

dimension_type [1] = 3

dimension_length [1] = 3

Since second dimension_type [1] equal to 3 indicates that the dimension ID is a quality ID with reference to Table 4, quality scalability is supported.

dimension_length [1] = 3 indicates that the length of the dimension ID representing quality scalability is three bits.

Thus, the layer ID transmitted via the bitstream is a dimension_length sum of six, and vps_layer_id [i] is six bits.

A lowest layer, that is, a base layer, does not have a reference layer, and thus vps_layer_id may not be signaled.

vps_layer_id [1] = 1 (000001)

num_direct_ref_layers[1] = 1

ref_layer_id[ 1 ][ 0 ] = 0

vps_layer_id [1] = 1 indicates that vps_layer_id[1] of a first layer is one, which is signaled as a bit string "000001." First three bits (000) of "000001" may indicate the dependency ID representing a spatial dimension, and last three bits (001) may indicate the quality ID representing a quality dimension.

num_direct_ref_layers[ 1 ] = 1 indicates that the number of layers that the first layer directly refers to is one, and ref_layer_id[ 1 ][ 0 ] = 0 indicates that the ID of the direct reference layer specifies a 0-th layer.

vps_layer_id [2] = 16 (010000)

num_direct_ref_layers[2 ] = 1

ref_layer_id[ 2 ][ 0 ] = 0

vps_layer_id [2] = 16 indicates that vps_layer_id[2] of a second layer is 16, which is signaled as a bit string "001000." First three bits (001) of "001000" may be the dependency ID representing the spatial dimension, and last three bits (000) may indicate the quality ID representing the quality dimension.

num_direct_ref_layers[2 ] = 1 indicates that the number of layers that the second layer directly refers to is one, and ref_layer_id[ 2 ][ 0 ] = 0 indicates that the ID of the direct reference layer specifies the 0-th layer.

That is, the second layer and the first layer directly refer to the same 0-th layer.

vps_layer_id [3] = 17 (010001)

num_direct_ref_layers[3 ] = 1

ref_layer_id[ 3 ][ 0 ] = 2

vps_layer_id [3] = 17 indicates that vps_layer_id[3] of a third layer is 17, which is signaled as a bit string "001001." First three bits (001) of "001001" may be the dependency ID representing the spatial dimension, and last three bits (001) may indicate the quality ID representing the quality dimension.

num_direct_ref_layers[3 ] = 1 indicates that the number of layers that the third layer directly refers to is one, and ref_layer_id[ 3 ][ 0 ] = 2 indicates that the ID of the direct reference layer specifies the second layer.

vps_layer_id [4] = 32 (100000)

num_direct_ref_layers[4 ] = 1

ref_layer_id[ 4 ][ 0 ] = 2

vps_layer_id [4] = 32 indicates that vps_layer_id[4] of a fourth layer is 32, which is signaled as a bit string "010000." First three bits (010) of "010000" may be the dependency ID representing the spatial dimension, and last three bits (000) may indicate the quality ID representing the quality dimension.

num_direct_ref_layers[4 ] = 1 indicates that the number of layers that the fourth layer directly refers to is one, and ref_layer_id[ 4 ][ 0 ] = 2 indicates that the ID of the direct reference layer specifies the second layer.

vps_layer_id [5] = 33 (100001)

num_direct_ref_layers[5 ] = 1

ref_layer_id[ 5 ][ 0 ] = 4

vps_layer_id [5] = 33 indicates that vps_layer_id[5] of a fifth layer is 33, which is signaled as a bit string "010001." First three bits (010) of "010001" may be the dependency ID representing the spatial dimension, and last three bits (000) may indicate the quality ID representing the quality dimension.

num_direct_ref_layers[5 ] = 1 indicates that the number of layers that the fifth layer directly refers to is one, and ref_layer_id[ 5 ][ 0 ] =4 indicates that the ID of the direct reference layer specifies the fourth layer.

Table 5 illustrates a video parameter set extension according to another embodiment of the present invention.

**[Table 5]**

| vps_extension() { | Descriptor |
|---|---|
| white( !byte_aligned( ) ) | |
| **vps_extension_byte_alignment_reserved_one_bit** | u(1) |
| // layer specific information | |
| **num_dimension_minus1** | ue(v) |
| for (i = 0; i <= num_dimension_minus1; i++) { | |
| **dimension_type [i]** | u(4) |
| **dimension_len [i]** | u(3) |
| **}** | |
| for (i = 1; i <= Vps_max_layers_minus1: i++) { | |
| **vps_layer_id [i]** | u(n) |
| // layer dependency | |
| **num_direct_ref_layers[i]** | u(6) |
| for( j = 0; j < num**_**direct**_**ref**_**layers[i]; j++ ) | |
| **ref_layer_id[i][j]** | u(6) |
| } | |
| } | |

Referring to Table 5, vps_extension_byte_alignment_reserved_one_bit is 1.

num_dimensions_minus1 [ i ] plus 1 specifies the number of dimension types and dimension IDs signaled for each layer.

dimension_type[ i ] specifies, as illustrated in Table 4, the j-th scalability dimension type of the i-th layer.

dimension_len[ i ] specifies the length, that is, bits, of the dimension ID of the i-th layer and may have a value in a range of 1 to 8.

dimension_len[ i ] may also be signaled as syntax element dimension_id_len or dimension_id_len_minus1.

vps_layer_id [ i ] specifies the layer ID of the i-th layer to which dependency information is applied, and bits of each vps_layer_id [ i ] may be configured as follows.

dimension_len [0] + dimension_len [1] + ... + dimension_len [num_dimension_minus1]

That is, bits of vps_layer_id [ i ] may be a value of dimension_len[ i ] or dimension_id_len_minus1 plus 1, that is, the sum of bits of values specified by dimension_len[ i ] or dimension_id_len_minus1.

The layer ID information included in the video parameter set may be the same as the information for identifying the layer included in the NAL unit header.

num_direct_ref_layers[i] specifies the number of layers to which the i-th layer directly refers.

ref_layer_id[ i ][ j ] is information for identifying the j-th layer to which the i-th layer directly refers.

Although vps_layer_id [ i ] is limited to six bits in Table 3, vps_layer_id [ i ] has a length which is not fixed bits in Table 5. A descriptor for vps_layer_id [ i ] is u(n), which means that integer n bits are used to transmit information, where n may change depending on the value of another syntax. According to the present embodiment, a layer ID for identifying a layer and vps_layer_id [i] bits may be determined on the sum of dimension_len[ i ].

That is, according to the present embodiment, the sum of dimension_len is not limited, but each dimension_len [i] may have a value of three bits, that is, at most 8.

Table 6 illustrates a video parameter set extension according to still another embodiment of the present invention.

**[Table 6]**

| vps_extension( ) { | Descriptor |
|---|---|
| while( !byte_aligned( ) ) | |
| **vps_extension_byte_alignmen_reserved_one_bit** | u(1) |
| // layer specific information | |
| **num_dimension_minus1** | ue(v) |
| for (i = 0; i <= num_dimension_minus1; i++) { | |
| **dimension_type [i]** | u(4) |
| **dimension_len [i]** | ue(v) |
| } | |
| for (i = 1; i <= vps_max_layers_minus1; i++) { | |
| **vps_layer_id [i]** | u(n) |
| // layer dependency | |
| **num_direct_**l**ayers [i]** | u(6) |
| for( j = 0; j < num_direct_ref_layers[ i ]; j++ ) | |
| **ref_layer_id [i][j]** | u(6) |
| } | |
| } | |

Referring to Table 6, vps_extension_byte_alignment_reserved_one_bit is 1.

num_dimensions_minus1 [ i ] plus 1 specifies the number of dimension types and dimension IDs signaled for each layer.

dimension_type[ i ] specifies, as illustrated in Table 4, the j-th scalability dimension type of the i-th layer.

dimension_len[ i ] specifies the length, that is, bits, of the dimension ID of the i-th layer and may have a value in a range of 1 to 8.

vps_layer_id [ i ] specifies the layer ID of the i-th layer to which dependency information is applied, and bits of each vps_layer_id [ i ] may be configured as follows.

dimension_len [0] + dimension_len [1] + ... + dimension_len [num_dimension_minus1]

The layer ID information included in the video parameter set may be the same as the information for identifying the layer included in the NAL unit header.

num_direct_ref_layers[i] specifies the number of layers to which the i-th layer directly refers.

ref_layer_id[ i ] [ i ] is information for identifying the j-th layer to which the i-th layer directly refers.

According to the present embodiment, ue(v) may be assigned as a descriptor for dimension_len [i]. ue(v) represents a syntax element encoded by exponential-Golomb coding, which means that information is coded not by fixed length coding but by an encoding scheme which adaptively determines bit length. When exponential-Golomb coding is used, bit length is variably determined depending on an exponential-Golomb code, and thus the number of bits used for indicating dimension_len [i] may be variable.

vps_layer_id [ i ] may also have a variable value depending on bits of dimension_len [i].

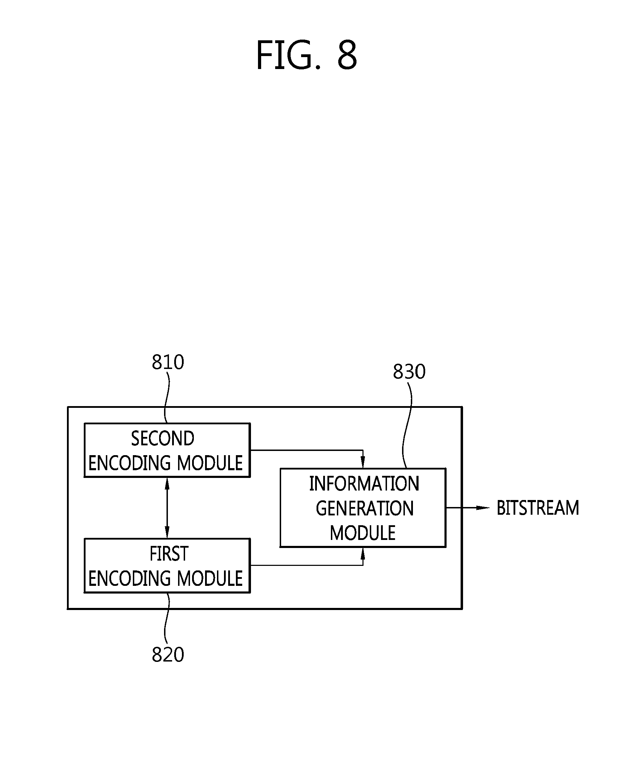

FIG. 8 is a block diagram illustrating a video encoding apparatus according to an embodiment of the present invention.

As illustrated in FIG. 8, the encoding apparatus according to the present embodiment includes a first encoding module 810, a second encoding module 820 and an information generation module 830.

The first encoding module 810 may correspond to the encoding module 135 for encoding layer 0 in the video encoding apparatus of FIG. 1, and the second encoding module 820 may correspond to the encoding module 105 for encoding layer 1 in the video encoding apparatus of FIG. 1.

The first encoding module 810 and the second encoding module 820 perform prediction, transformation and entropy-coding on a video of each layer, and descriptions thereof are substantially the same as those of the encoding apparatus mentioned with reference to FIG. 1 and thus are omitted herein.

The encoding apparatus may encode three or more layers, in addition to two layers, and may further include a third encoding module and a fourth encoding module in this case.

The information generation module 830 according to the present embodiment generates information on scalability of layers when the layers are encoded by the encoding modules 810 and 820. The information generation module 830 may be a part included in the first encoding module 810 or a part included in the second encoding module 820. Alternatively, the information generation module 830 may be designed to be included in each of the encoding modules 810 and 820. That is, although the information generation module 830 is shown as an independent component in FIG. 8 for convenience of description, a physical structure and position of the information generation module 30 are not limited to FIG. 8.

The information generation module 830 may generate the number of dimension types, a dimension type representing a scalability type, information indicating the length of a dimension ID, a dimension ID, a layer ID, or the like. A mapping relationship between a dimension type and a dimension ID may be generated based on a predetermined table.

Bits of a layer ID may be the length of a dimension ID, that is, the sum of bits of the dimension ID. For example, when the layer ID is six bits, the dimension ID of the corresponding layer may be six bits in total.

The information generation module 830 may also generate information on the number of layers that a layer directly refers to and a reference layer ID for identifying a reference layer.

The information generated by the information generation module 830 is encoded and transmitted as a bitstream to a video decoding apparatus, similar to other types of information.

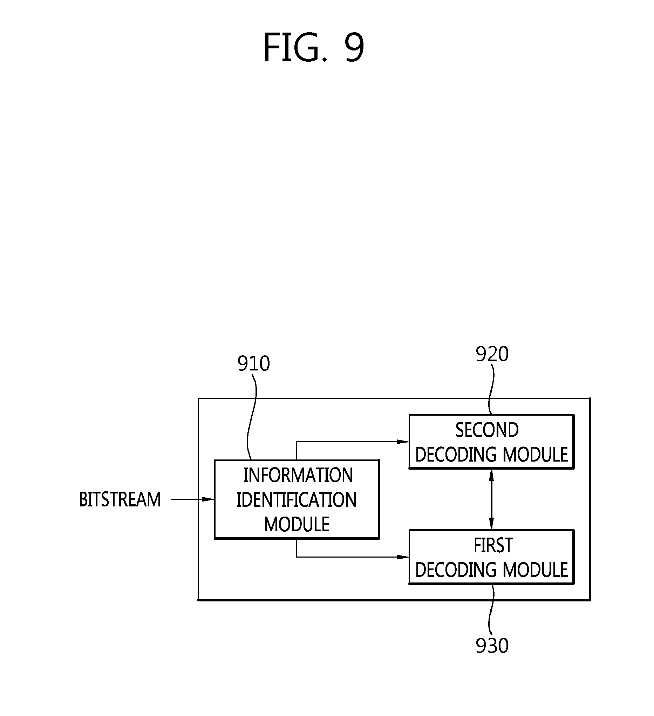

FIG. 9 is a block diagram illustrating a video decoding apparatus according to an embodiment of the present invention.

As illustrated in FIG. 9, the decoding apparatus according to the present embodiment includes an information identification module 910, a first decoding module 920 and a second decoding module 930.

The information identification module 910 identifies, based on a bitstream received from the video encoding apparatus, inter-layer scalability information when layers are encoded by the respective decoding modules 920 and 930. The information identification module 930 may be configured as a parsing module for parsing a bistream or as an entropy decoding module for entropy-decoding a bitstream.

The information identification module 910 may be a part included in the first decoding module 920 or a part included in the second decoding module 930. Alternatively, the information identification module 910 may be designed as a plurality of components included in the respective decoding modules 920 and 930. That is, although the information identification module 910 is shown as an independent component in FIG. 9 for convenience of description, a physical structure and position of information identification module 910 are not limited to FIG. 9.

The information received from the encoding apparatus and identified by the information identification module 910 may include the number of dimension types, a dimension type representing a scalability type, information indicating the length of a dimension ID, a dimension ID, a layer ID, or the like. A mapping relationship between a dimension type and a dimension ID may be identified based on a predetermined table.

The information identification module 910 may also receive and identify information on the number of layers that a layer directly refers to and a reference layer ID for identifying a reference layer.

The inter-layer scalability information identified by the information identification module 910 is transmitted to the decoding modules 920 and 930, and the decoding modules 920 and 930 may perform inter-layer prediction and reconstruction based on the scalability information.

The first decoding module 920 may correspond to the decoding module 135 for decoding layer 0 in the video decoding apparatus of FIG. 2, and the second decoding module 930 may correspond to the decoding module 105 for decoding layer 1 in the video decoding apparatus of FIG. 2.

The first decoding module 920 and the second decoding module 930 perform entropy-decoding, inverse transformation, prediction and reconstruction on a video of each layer, and descriptions thereof are substantially the same as those of the decoding apparatus mentioned with reference to FIG. 2 and thus are omitted herein.

The decoding apparatus may decode three or more layers, in addition to two layers, and may further include a third decoding module and a fourth decoding module in this case.

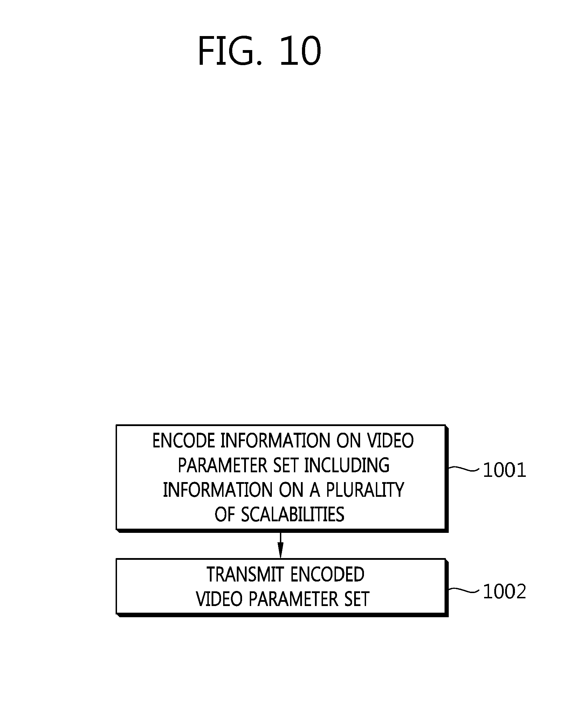

FIG. 10 is a flowchart illustrating a method of encoding video information according to an embodiment of the present invention.

As illustrated, an encoding apparatus encodes information on a video parameter set including information on a plurality of scalabilities (S81001).

The information on the plurality of scalabilities included in the video parameter set may include the number of dimension types, a dimension type representing a scalability type, information indicating the length of a dimension ID, a dimension ID, a layer ID, or the like. A dimension ID refers to an index of a particular dimension type with respect a layer.

A mapping relationship between a dimension type and a dimension ID may be set, for example, through a lookup table.

Bits of a layer ID may be the length of a dimension ID, that is, the sum of bits of the dimension ID. For example, when the layer ID is six bits, the dimension ID of the corresponding layer may be six bits in total.

The video parameter set may also include information on the number of layers that a layer directly refers to and a reference layer ID for identifying a reference layer.

The encoding apparatus may transmit the encoded information on the video parameter set via a bitstream (S1002).

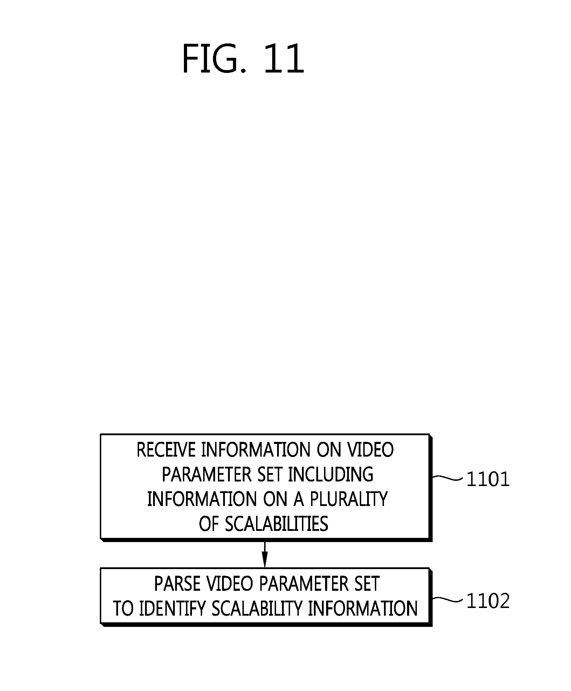

FIG. 11 is a flowchart illustrating a method of decoding video information according to an embodiment of the present invention.

Referring to FIG. 11, a decoding apparatus receives information on a video parameter set extension including information on a plurality of scalabilities (S1101).

The video decoding apparatus parses the video parameter set to identify, that is, derive, the information on the scalabilities included in a bitstream (S1102). The video information may be parsed by an entropy decoding module or a separate parsing module.

The information on the plurality of scalabilities included in the video parameter set may include the number of dimension types, a dimension type representing a scalability type, information indicating the length of a dimension ID, a dimension ID, a layer ID, or the like. A dimension ID refers to an index of a particular dimension type with respect a layer.

A mapping relationship between a dimension type and a dimension ID may be set through a table, and the decoding apparatus may identify scalabilities using the table.

Bits of a layer ID may be the length of a dimension ID, that is, the sum of bits of the dimension ID. For example, when the layer ID is six bits, the dimension ID of the corresponding layer may be six bits in total.

As a method for indicating a relationship between a layer ID and a scalability dimension ID in a bitstream supporting a plurality of scalabilities, there may be a first method of indicating a mapping method of a layer ID onto a scalability dimension ID and a second method of partitioning or splicing bits of a layer ID and indicating which dimension type is present in allocated bits.

When the first method of indicating the mapping method of the layer ID onto the dimension ID is employed as the method for indicating the relationship between the layer ID and the dimension ID, the decoding apparatus may receive a dimension ID. In this case, the decoding apparatus may identify, through information indicating the length of the dimension ID, how many bits information on a dimension occupies in the entire layer ID and identify a dimension ID corresponding to the bits to map the layer ID onto the dimension ID.

For example, when a view ID has a length of three bits and a dependency ID has a length of two bits, a dimension ID representing multi-view scalability may be signaled with three-bit information and a dimension ID representing spatial scalability may be signaled with two-bit information.

Meanwhile, when a layer ID and a dimension ID are mapped onto each other by the second method of splicing the bits of the layer ID and indicating which dimension type is present in the allocated bits, the decoding apparatus splices the layer ID to directly signal the dimension ID. In this case, the dimension ID may not be signaled to the decoding apparatus.

For instance, suppose that a layer ID is six bits and multi-view scalability and spatial scalability are supported. Multi-view scalability and spatial scalability may constitute the layer ID with three bits each. When the layer ID is "001010," a view ID may be "001" and a dependency ID may be "010."

The foregoing two methods may be distinguished through flag information indicating whether the bits of a layer ID is spliced for use. When the first method is used, the flag information indicating whether the bits of the layer ID is spliced for use may be 0. When the second method is used, the flag information indicating whether the bits of the layer ID is spliced for use may be 1.

The video parameter set may also include information on the number of layers that a layer directly refers to and a reference layer ID for identifying a reference layer.

As described above, according to the present invention, there are provided a method for describing scalability information in a bitstream, particularly matching dimension information and layer information to identify a layer, and an apparatus using the same.

While the methods in the above-mentioned exemplary system have been described on the basis of flowcharts including a series of steps or blocks, the invention is not limited to the order of steps and a certain step may be performed in a step or an order other than described above or at the same time as described above. The above-mentioned embodiments may include various examples. Therefore, the invention includes all substitutions, corrections, and modifications belonging to the appended claims.

## Claims

1. A method of decoding a video which decodes a bitstream comprising a plurality of layers, the method comprising:
receiving a video parameter set comprising information on a dimension type for identifying scalability of the layers and on a length of a dimension identifier (ID) for identifying a layer to which the dimension type is applied; and
parsing the video parameter set to derive scalability information comprised in the bitstream.

2. The method of claim 1, comprising further receiving at least one of a number of dimension types, the dimension ID for identifying the layer to which the dimension type is applied, and a layer ID.

3. The method of claim 1, wherein the dimension type and the dimension ID for identifying the layer to which the dimension type is applied are identified by referring to a preset table.

4. The method of claim 2, wherein a sum of lengths of dimension IDs for an i-th layer is equal to bits of a layer ID of the i-th layer.

5. The method of claim 2, wherein a sum of lengths of dimension IDs for an i-th layer is 6.

6. The method of claim 1, wherein the dimension type comprises at least one of multi-view scalability, depth scalability, spatial scalability and quality scalability.

7. The method of claim 2, wherein when the number of dimension types is 2, only one piece of information on the length of the dimension ID is received.

8. The method of claim 2, further comprising receiving flag information indicating whether bits of the layer ID are partitioned to indicate the dimension ID, wherein the dimension ID is received when the flag information is 0.

9. An apparatus for decoding a video which decodes a bitstream comprising a plurality of layers, the apparatus comprising:
an information identification module to parse a video parameter set comprising information on a dimension type for identifying scalability of the layers and on a length of a dimension identifier (ID) for identifying a layer to which the dimension type is applied and to derive scalability information; and
an upper layer decoding module to reconstruct a video of an upper layer using the scalability information.

10. The apparatus of claim 9, wherein the information identification module further receives and identifies at least one of a number of dimension types, the dimension ID for identifying the layer to which the dimension type is applied, and a layer ID.

11. The apparatus of claim 9, wherein the dimension type and the dimension ID for identifying the layer to which the dimension type is applied are identified by referring to a preset table.

12. The apparatus of claim 10, wherein a sum of lengths of dimension IDs for an i-th layer is equal to bits of a layer ID of the i-th layer.

13. The apparatus of claim 10, wherein a sum of lengths of dimension IDs for an i-th layer is 6.

14. The apparatus of claim 9, wherein the dimension type comprises at least one of multi-view scalability, depth scalability, spatial scalability and quality scalability.

15. The apparatus of claim 10, wherein when the number of dimension types is 2, only one piece of information on the length of the dimension ID is received.

16. The apparatus of claim 10, wherein the information identification module further receives flag information indicating whether bits of the layer ID are partitioned to indicate the dimension ID, wherein the dimension ID is received when the flag information is 0.
